# EUROPEAN PATENT SPECIFICATION

(11) **EP 3 165 137 B1**
(45) Date of publication and mention of the grant of the patent: **06.10.2021**
(21) Application number: 16186713.0
(22) Date of filing: 31.08.2016
(51) Int. Cl.: A47J 31/44

(54) **BEVERAGE MACHINE WITH WATER AMOUNT DETECTING MEANS**
GETRÄNKEMACHINE MIT MITTEL ZUM DETEKTIEREN DER WASSERMENGE
MACHINE POUR BOISSONS AVEC MOYENS POUR DETECTER LA QUANTITE D'EAU.

(30) Priority: 06.09.2015 CN 201520684564 U
(43) Date of publication of application: 10.05.2017
(73) Proprietor: BSH Hausgeräte GmbH, 81739 München (DE)
(72) Inventor: Ling, Yuzheng, 210046 Jiangsu Province, P.R.C. 210000 Nanjing (CN); Lu, Peng, Nanjing 210046 (CN); Xiong, Yingjie, 210046 Nanjing (CN)

(56) References cited:
- US-A- 4 748 300
- US-A1- 2006 288 777
- US-A1- 2007 283 754
- US-A1- 2012 036 928
- None

## Description

The invention relates to a beverage machine, and specifically, to a water amount detecting means of a beverage machine, which is mainly applied to a coffee machine, a juice machine, and the like.

A water amount detecting means is disposed in a water tank of an existing beverage machine, for reminding a user to add water, so as to avoid continuing heating after the water is used up. Mostly, a float is disposed in the water tank, and a float position sensor is disposed on the body, for detecting position information about the float. Specifically, when the water level in the water tank reaches a predetermined height, the height of the float changes accordingly, and corresponding information can be detected by the float position sensor disposed outside the water tank. Therefore, the water level in the water tank can be monitored, so that the beverage machine is controlled or/and provides a prompt when the water level in the water tank is lower than or higher than a predetermined value.

Document US2006/288777 discloses a liquid level sensing arrangement for a tank may include a float having a disc-like shape and a sensor that detects a position of the float relative to the tank. The float may have an overall height/total displacement ratio of 0.5 or less. The float may have a range of motion relative to the tank so that at least a portion of the float may move below a portion of a bottom wall of the tank and/or below an outlet for the tank.

Document US2007/283754 A1 discloses a device for monitoring the level of a supply reservoir, in particular of a hydraulic motor vehicle brake system, comprising a float that has a magnet for actuating a switch or a sensor. The float has a multipart design comprising a first float part and a second float part and the magnet is encased and arranged between the two float parts.

Document US2012/036928A1 discloses a liquid volume inspection device with improved floating ball is disclosed which comprises an internal pipe, a coil wound about the outside of the internal pipe, an external sleeve, an improved floating ball, a base and an upper fixer, in which a magnetic inductor is accommodated within the improved floating ball, the improved floating ball is installed within the internal pipe, the upper end of the internal pipe is fixedly connected in screw with the upper fixer and the lower end of the internal pipe is fixedly connected to the base; when a liquid flows into the internal pipe, the improved floating ball floats in the internal pipe, thereby forming a smaller contact area between the inner wall of the internal pipe and the improved floating ball, so that the surface of the improved floating ball is not attachable to the inner wall of the internal pipe, and the improved floating ball is allowed to change the position thereof in real-time according to the elevation of the liquid level; then the variation of electrical induction in the magnetic inductor can be induced through the coil and the liquid volume therein can be shown on the external display panel through circuitry conversion.

Also at present, the float is formed by injecting or providing an object such as a magnetic iron in a bore of a float body, and then sealing the float body. The shape of the magnetic iron (for example, the diameter), the position in the float body at which the magnetic iron is disposed, and the shape of the bore in the float body all need to be designed accordingly, and the mounting process includes a great amount of steps, and is relatively complicate, which undoubtedly increases a manufacturing cost of the float. Meanwhile, once a quality problem occurs in the float, the problem can be addressed only by changing the float, and it is inconvenient to repair and replace the same.

Therefore, there is not an effective solution provided for solving the problems of complicate processing procedure and high cost of a water amount detecting means in a beverage machine of the prior art yet.

The invention provides a beverage machine, so as to at least solve the problems of complicate processing procedure and high cost of a water amount detecting means in a beverage machine of the prior art.

To realize the objective, an aspect of the invention provides a water amount detecting means of a beverage machine.

Provided is a beverage machine according to the invention. The beverage machine includes a body, a water tank, a control means for controlling operating of the beverage machine, and a water amount detecting means. The water amount detecting means includes: a float that is disposed in the water tank and has a cavity structure; and a sensor disposed in the body, where the sensor detects and determines a position of the float, and transmits a signal to the control means, where the float includes a first part and a second part, the cavity structure being constructed by closedly connecting the first part or the second part. As compared with the prior art, through the solution of placing a magnetic object, the float of this solution is constructed by two parts. A cavity structure is arranged in the closed space constructed by the first part and the second part, which can be used for floating. The processing is simple, the rate of finished products is high, and the cost is reduced.

According to the invention, the sensor is a magnetic sensor.

According to the invention, the first part and the second part are manufactured by using a magnetic material. The first part and the second part of the float are manufactured by using a magnetic material. In this way, it is not required to place or inject a magnetic object. Preferably, the float is formed by direct injection molding in the processing, thereby avoiding a plurality of steps of the prior art.

The first part and the second part are closedly connected. Through closed connection of the first part and the second part, the cavity structure is arranged in the closed space.

Preferably, an alarm prompt means that is connected to the water amount detecting means is disposed on the body. The alarm prompt means is disposed on the body, mainly includes a sounding means and an indicating means, is connected to the water amount detecting means, and is configured to remind a user of a normal water amount state and a state of needing water supplement of the beverage machine.

Through the invention, the problems of complicate processing procedure and high cost of a water amount detecting means in a beverage machine of the prior art are solved. In one aspect, the manufacturing cost of a water amount detecting means in a beverage machine is reduced, and in another aspect, it is easy to repair and replace a component in the water amount detecting means.

The described accompanying drawings here are used to fully understand the invention, and constitute a part of the present application. The exemplary embodiments and description thereof of the invention are used to interpret the invention, but are not limitative of the invention, and wherein:
- FIG. 1: is a schematic structural diagram of a beverage machine; and
- FIG. 2: is a schematic diagram of a float of a water tank and a body in FIG. 1.

The invention is described in detail in the embodiments below with reference to the accompanying drawings. It should be noted that the embodiments and the features in the embodiments of the present application can be mutually combined if there is not a conflict.

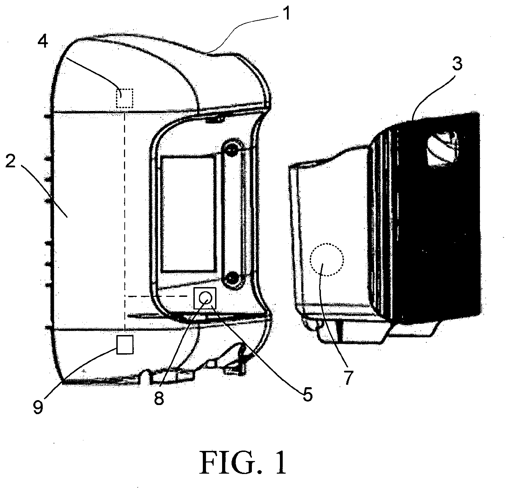

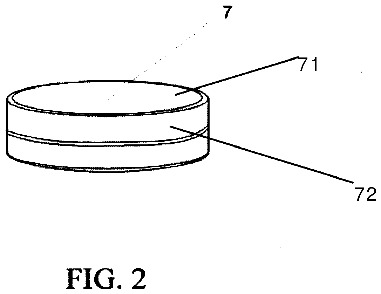

The invention provides a beverage machine. FIG. 1 is a schematic structural diagram of a beverage machine. FIG. 2 is a schematic structural diagram of a float. As shown in FIG. 1 and FIG. 2:
A beverage machine 1 according to this embodiment includes a body 2, a water tank 3, a control means 4 configured to control operating of the beverage machine 1, and a water amount detecting means 5. The water amount detecting means 5 includes: a float 7 that is disposed in the water tank 3 and has a cavity structure 6; and a sensor 8 disposed in the body 2, where the sensor detects and determines a position of the float 7, and transmits a signal to the control means 4. The float 7 includes a first part 71 and a second part 72.

The cavity structure 6 is constructed by closedly connecting the first part 71 and the second part 72.

The sensor 8 in the solution is a magnetic sensor and is capable of generating an inductive signal with respect to the magnetic object.

The first part 71 and the second part 72 are manufactured by using a magnetic material. Both the first part 71 and the second part 72 of the float 7 are manufactured by using a magnetic material. In this way, it is not required to place or inject a magnetic object. Meanwhile, the float can be formed by direct injection molding in the processing, thereby avoiding a plurality of steps of the prior art.

Preferably, an alarm prompt means 9 that is connected to the water amount detecting means 5 is disposed on the body 2. The alarm prompt means 9 is disposed on the body 2, mainly includes a sounding means and an indicating means, is connected to the water amount detecting means 5, and is configured to remind a user of a normal water amount state and a state of needing water supplement of the beverage machine.

Through the invention, the problems of complicate processing procedure and high cost of a water amount detecting means in a beverage machine of the prior art are solved. In one aspect, the manufacturing cost of a water amount detecting means in a beverage machine is reduced, and in another aspect, it is easy to repair and replace a component in the water amount detecting means.

Various specific embodiments described in the foregoing and shown in accompanying drawings are only used for illustrating the invention, and are not entirety of the invention.

The scope of the invention is defined in the appended claims.

## Claims

1. A beverage machine (1), comprising a body (2), a water tank (3), a control means (4) configured to control operating of the beverage machine (1), and a water amount detecting means (5), comprising a float (7) disposed in the water tank, a sensor (8) disposed in the body (2), wherein the sensor (8) detects and determines a position of the float (7), and transmits a signal to the control means (4), wherein the sensor (8) is a magnetic sensor, **characterized in that** the float (7) has a cavity structure (6), wherein the float (7) comprises a first part (71) and a second part (72), the cavity structure (6) being constructed by closedly connecting the first part (71) and the second part (72) and wherein the first part (71) and the second part (72) are manufactured by using a magnetic material.

2. The beverage machine according to claim 1, **characterized in that** the float (7) is formed by direct injection molding in the processing.

3. The beverage machine according to claim 1, **characterized in that**:
an alarm prompt means (9) that is connected to the water amount detecting means (5) is disposed on the body (2).

## Patentansprüche

1. Getränkemaschine (1), umfassend einen Körper (2), einen Wassertank (3), eine Steuerung (4), die dazu ausgebildet ist, den Betrieb der Getränkemaschine (1) zu steuern, und eine Wassermengen-Erfassungseinrichtung (5), die einen in dem Wassertank angeordneten Schwimmer (7), einen in dem Körper (2) angeordneten Sensor (8) umfasst, wobei der Sensor (8) eine Position des Schwimmers (7) erfasst und bestimmt, und ein Signal an die Steuerung (4) sendet, wobei der Sensor (8) ein magnetischer Sensor ist, **dadurch gekennzeichnet, dass** der Schwimmer (7) eine Fachstruktur (6) aufweist, wobei der Schwimmer (7) einen ersten Teil (71) und einen zweiten Teil (72) umfasst, die Fachstruktur (6) durch geschlossenes Verbinden des ersten Teils (71) und des zweiten Teils (72) aufgebaut ist und wobei der erste Teil (71) und der zweite Teil (72) unter Verwendung eines magnetischen Materials hergestellt sind.

2. Getränkemaschine nach Anspruch 1, **dadurch gekennzeichnet, dass** der Schwimmer (7) durch Direktspritzgießen in der Verarbeitung gebildet ist.

3. Getränkemaschine nach Anspruch 1, **dadurch gekennzeichnet, dass**:
eine Alarmaufforderungseinrichtung (9), die mit der Wassermengen-Erfassungseinrichtung verbunden ist, auf dem Körper (2) angeordnet ist.

## Revendications

1. Machine à boissons (1), comprenant un corps (2), un réservoir d'eau (3), un moyen de commande (4) configuré afin de commander l'ouverture de la machine à boissons (1) et un moyen de détection de la quantité d'eau (5), comprenant un flotteur (7) disposé dans le réservoir d'eau, un capteur (8) disposé dans le corps (2), dans lequel le capteur (8) détecte et détermine une position du flotteur (7) et transmet un signal au moyen de commande (4), dans lequel le capteur (8) est un capteur magnétique, **caractérisée en ce que** le flotteur (7) possède une structure de cavité (6), dans lequel le flotteur (7) comprend une première partie (71) et une deuxième partie (72), la structure de cavité (6) étant construite en reliant de façon fermée la première partie (71) et la deuxième partie (72) et dans lequel la première partie (71) et la deuxième partie (72) sont fabriquées en utilisant un matériau magnétique.

2. Machine à boissons selon la revendication 1, **caractérisée en ce que** le flotteur (7) est formé via un moulage par injection direct dans le traitement.

3. Machine à boissons selon la revendication 1, **caractérisée en ce que** : un moyen d'alarme (9) relié au moyen de détection de la quantité d'eau (5) est disposé sur le corps (2).
